# EUROPÄISCHE PATENTSCHRIFT

(11) **EP 1 561 504 B1**
(45) Veröffentlichungstag und Bekanntmachung des Hinweises auf die Patenterteilung: **06.05.2009**
(21) Anmeldenummer: 05000372.2
(22) Anmeldetag: 11.01.2005
(51) Int. Cl.: B01D 29/33, B01D 29/96, B01D 35/027

(54) **Filteranlage für Flüssigkeiten**
Filtration device for liquids
Dispositif filtrant pour liquides

(30) Priorität: 26.01.2004 DE 102004004120
(43) Veröffentlichungstag der Anmeldung: 10.08.2005
(73) Patentinhaber: Schröder Maschinenbau KG, 33824 Werther (DE)
(72) Erfinder: Umbach, Christoph, 33824 Werther (DE)
(74) Vertreter: Wiebusch, Manfred

(56) Entgegenhaltungen:
- DE-A1- 19 751 369
- DE-C- 947 841
- GB-A- 1 218 935
- US-A- 1 072 371

## Beschreibung

Die Erfindung betrifft eine Filteranlage für Flüssigkeiten, die einen Filter aufweist, der aus einer Entnahmeposition geradlinig in eine Arbeitsposition absenkbar ist. Der Filter weist am Boden eine Öffnung für ein Rohr zum Aufschieben des Filters auf das Rohr auf und wird beim Absenken von einer Dichteinrichtung gegen das Rohr abgedichtet. In der Wand des Rohres ist ein Durchlaß vorhanden, der innen mit einer Absaugöffnung verbunden ist.

Bei der Filteranlage kann es sich beispielsweise um eine Filteranlage für Pökellake handeln, die aus einem Vorratsbecken durch den Filter über eine Absaugöffnung abgepumpt und einer Pökelmaschine zugeführt wird. Üblicherweise wird von der Pökelmaschine abfließende Pökellake über einen Grobfilter ins Vorratsbecken rückgeführt. Um die Lakenpumpe zu schützen und ein Verstopfen von Injektionsnadeln der Pökelmaschine durch eingebrachte Partikel oder Verunreinigungen zu verhindern, ist eine Feinfilterung der Pökellake nötig. Zu diesem Zweck weist eine herkömmliche Filteranlage beispielsweise zwei parallel angeordnete Flachfilter auf, die den Hauptteil des Vorratsbekkens von einem kleineren Teil des Beckens trennen, aus dem die Pökellake abgesaugt wird. Diese Flachfilter werden durch die von ihnen aus der Pökellake gefilterten Partikel mit der Zeit verstopft und können von Hand zur Reinigung entnommen werden.

Um den Vorgang des Filterwechsels zu vereinfachen, ist es aus der europäischen Patentanmeldung EP 1 275 305 bekannt, zwei zylindrische Filter vorzusehen, die jeweils von einer horizontalen Arbeitsposition in eine vertikale Entnahmeposition schwenkbar sind. In der horizontalen Arbeitsposition durchströmt die Pökellake den Filter von außen nach innen und wird von der Lakenpumpe abgepumpt. Der Filter ist allerdings auf seiner überwiegenden Länge von einem Schutzrohr umgeben, das zusammen mit dem Filter in die vertikale Entnahmeposition verschwenkt wird. In dieser Position ragt das Schutzrohr über die Flüssigkeitsoberfläche hinaus und trennt den Filter von der sich im Becken befindenden Pökellake. Die Absaugöffnung ist in dieser Position versperrt. Der Filter kann nun nach oben herausgezogen werden und gereinigt werden. Währenddessen kann die Lake über den zweiten Filter, der sich noch in seiner Arbeitsposition befindet, abgesaugt werden.

Beim Herausziehen des von außen mit herausgefiltertem Material verstopften Filters aus dem Schutzrohr kann jedoch Material in das Rohr fallen. Nach dem Wiedereinsetzen des gereinigten Filters und Verschwenken des Filters und des Schutzrohres in die horizontale Arbeitsposition befände sich dieses Material dann bereits innerhalb des Filters und würde von der Lakenpumpe mit angesaugt werden. Dies ist jedoch zu vermeiden. Der Filterwechsel kann somit nicht sicher durchgeführt werden.

Ein weiterer Nachteil der genannten Filteranlage ist ihr großer Raumbedarf. Das Schutzrohr, das in der Entnahmeposition über die Flüssigkeitsoberfläche hinausragen muß, verdeckt in der Arbeitsposition den Filter größtenteils, so daß im wesentlichen nur die noch über das Schutzrohr hinausragende Länge des Filters wirksam ist. Dadurch ergibt sich eine große Gesamtlänge des Filters, für den zudem der Platz vorhanden sein muß, ihn aus der Horizontalen in die Vertikale zu schwenken.

Aus der WO 01/39859 A1 ist ein Filter der eingangs genannten Art bekannt, bei dem es sich um einen Kraftstoffilter handelt. Bei entnommenem Filter wird der Durchlaß im Rohr von einem Ventil verschlossen, welches von einer Druckfeder vor den Durchlaß geschoben wird. Beim Einsetzen des Filters nimmt dieser das Ventil mit, so daß dann das Innere des Filters mit dem Durchlaß in Verbindung steht. Nachteilig ist, daß das Ventil Raum in einem Bereich im Inneren des Filters einnimmt, so daß die Filterleistung herabgesetzt wird. Außerdem ist das Ventil im Bedarfsfalle umständlich von dem Rohr abzunehmen und schlecht zu reinigen. Ferner kann beim Filterwechsel unter Umständen bei einem etwaigen Festklemmen des Ventils diese Fehlfunktion erst dann bemerkt werden, wenn der Filter schon so weit abgehoben wurde, dass der Durchlaß außerhalb des Filters frei liegt und Flüssigkeit ungefiltert in das Rohr eindringen kann. Der Filterwechsel kann somit nicht sicher durchgeführt werden.

Aufgabe der Erfindung ist es, eine Filteranlage für Flüssigkeiten zu schaffen, die einen sicheren Filterwechsel ermöglicht und zudem einen geringeren Raumbedarf aufweist.

Diese Aufgabe wird erfindungsgemäß durch eine Filteranlage nach Anspruch 1 gelöst. Die Filteranlage weist eine Dichteinrichtung auf, die während des Absenkens des Filters, während eine Außenseite des Filters in Kontakt mit der Flüssigkeit im Becken steht, den Innenraum des Filters gegenüber der Flüssigkeit im Becken so abgedichtet hält, daß der Innenraum des Filters im wesentlichen nur über das Filterelement mit außerhalb des Filters befindlicher Flüssigkeit verbunden ist.

Ein Vorteil dieser Filteranlage ist ihr geringer Raumbedarf, da ein aufrecht stehender Filter, der beispielsweise zylindrisch sein kann, geradlinig nach oben entnehmbar ist. Ein weiterer Vorteil ist, daß außerhalb des Filters kein Schutzrohr erforderlich ist. Der unterhalb der Flüssigkeitsoberfläche liegende Teil des Filters kann somit in voller Höhe zum Filtern verwendet werden. Ein weiterer, wichtiger Vorteil ist es, daß der bei verschlossener Absaugöffnung entnommene Filter beim Wiedereinsetzen durch die Dichteinrichtung gegenüber der Flüssigkeit im Becken abgedichtet ist. Es kann daher nicht versehentlich ausgefiltertes Material in den Innenraum des Filters gelangen. Vielmehr füllt sich der Innenraum des Filters beim Absenken des Filters, indem die Flüssigkeit durch das Filterelement hindurchtritt.

Die Ansaugöffnung ist an einem mit dem Boden verbundenen, nach oben über die Flüssigkeitsoberfläche hinausreichenden Rohr angeordnet, und der Filter weist am Boden eine Öffnung für das Rohr auf, die beim Absenken des Filters von der Dichteinrichtung gegen das Rohr abgedichtet wird. Beim Absenken des Filters wird der Filter auf das Rohr aufgeschoben. In der Arbeitsposition des Filters ragt das Rohr im Innenraum des Filters auf. Die an dem Rohr angeordnete Ansaugöffnung befindet sich nun im Innenraum des Filters. Indem die Öffnung am Boden des Filters von der Dichteinrichtung gegen das Rohr abgedichtet wird, wird verhindert, daß beim Absenken des Filters ungefilterte Flüssigkeit in den Innenraum des Filters gelangt. Das Rohr ermöglicht somit eine besonders einfache und sichere Verschiebung des Filters in seine Arbeitsposition.

In der Wand des Rohrs sind ein oder mehrere verschließbare Durchlässe angeordnet, die innen mit der Absaugöffnung verbunden sind. Indem vor einem Wechseln des Filters die Durchlässe verschlossen werden, ist die Absaugöffnung vor einem Eintreten ungefilterten Materials geschützt.

In dem Rohr ist ein Schieber angeordnet, mit dem die Durchlässe und die Absaugöffnung gleichzeitig verschließbar sind. Die Bedienung ist dadurch besonders einfach. Der Schieber kann zur Reinigung entnehmbar sein. Dies erlaubt eine besonders gründliche und einfache Reinigung sowohl des Schiebers als auch des Rohres.

Vorteilhafte Ausgestaltungen der Erfindung ergeben sich aus den Unteransprüchen.

Vorzugsweise ist der Schieber mittels Federkraft in seiner Schließstellung gehalten und weist ein Abstützelement zum Abstützen in seiner Offenstellung auf dem sich in der Arbeitsposition befindenden Filter auf. Die Feder ermöglicht ein sicheres Verschließen der Durchlässe und der Absaugöffnung während des Wechselns des Filters. Das Abstützelement verhindert ein versehentliches Schließen im Betrieb des Filters und kann zudem die Federkraft auf den Filter übertragen, so daß der Filter festgehalten wird.

Vorzugsweise weist das Rohr an seinem oberen Ende Führungskonturen auf, an denen ein Deckel in der Art eines Bajonettverschlusses verriegelbar ist. Der Deckel dient der Abdichtung des Rohres. Er kann aber auch zur Abstützung einer Feder dienen, die die oben genannte Federkraft aufbringt. Vorteilhaft ist außerdem, daß zur Ausbildung der Führungskonturen eine beliebige, gegebene Wandstärke des Rohres ausreichend ist. Der Deckel kann beispielsweise bei einem Rohr mit kreisförmigen Querschnitt so gestaltet sein, daß er den Außendurchmesser des Rohres nicht übersteigt. Dadurch kann beim Absenken des Filters die Dichteinrichtung ungehindert an der Außenwand des Rohres entlang verschoben werden. Im Inneren des Rohres kann der Schieber den vollen Innendurchmesser des Rohres einnehmen und ist dennoch zur Reinigung nach oben entnehmbar.

In einer besonders bevorzugten Ausführungsform weist das Becken mindestens zwei unabhängig voneinander verschließbare Absaugöffnungen mit jeweils einem Filter auf, wobei die Filter unabhängig voneinander aus der Arbeitsposition in die Entnahmeposition bewegbar sind. Auf diese Weise kann ein kontinuierlicher Absaugbetrieb erfolgen, während nacheinander oder abwechselnd bei Bedarf die Filter gewechselt werden können.

Im folgenden wird ein Ausführungsbeispiel der Erfindung anhand der Zeichnung näher erläutert.

Es zeigen:
- Fig. 1: einen Teil einen Filteranlage mit einem Filter in seiner Arbeitsposition; und
- Fig. 2: einen Teil der Filteranlage mit dem Filter in seiner Entnahmeposition.

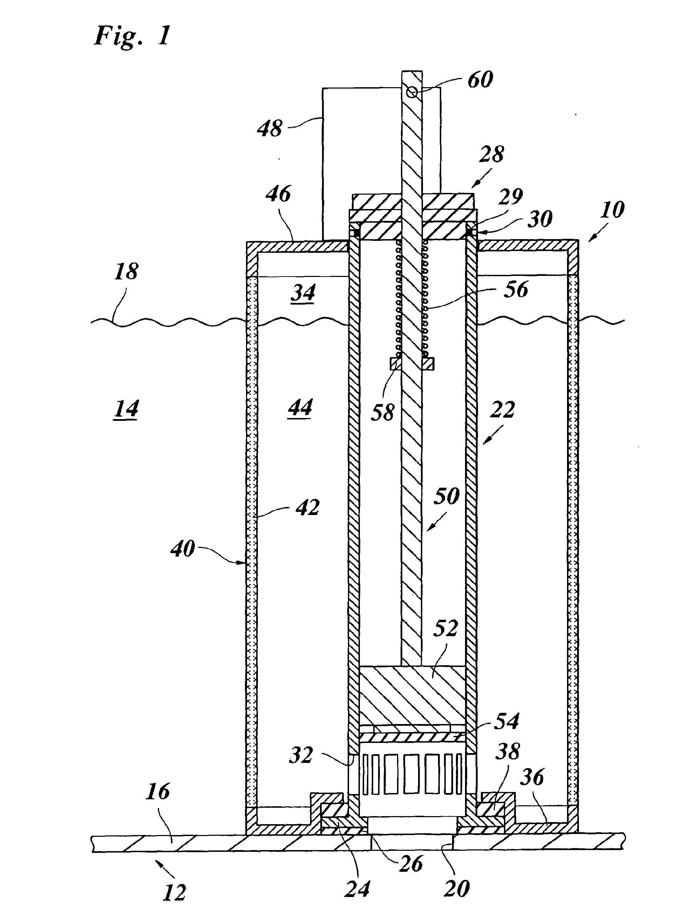

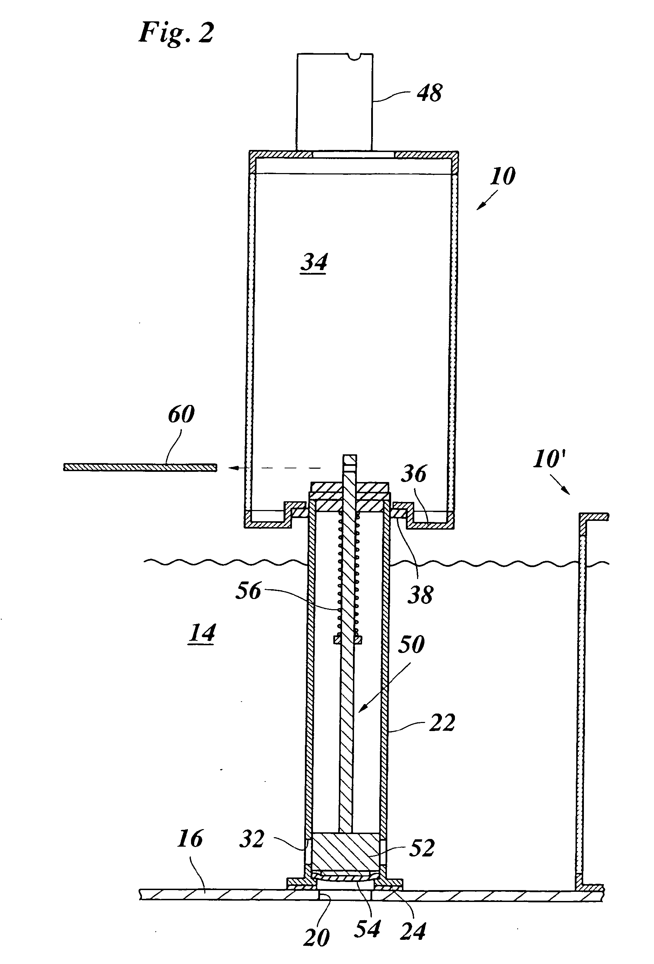

Figur 1 zeigt einen Filter 10, der in sich in einem Becken 12 befindende Flüssigkeit 14 eintaucht. Der Filter 10 ist beispielsweise aus Metall. Er ist Teil einer Filteranlage, zu der ein weiterer, gleichartiger Filter 10' (Figur 2) gehört, der in dem Becken 12 neben dem Filter 10 angeordnet ist. Von dem Becken 12 ist lediglich ein Boden 16 dargestellt. Das Becken 12 ist bis zur Flüssigkeitsoberfläche 18 mit der Flüssigkeit 14 gefüllt. Die Flüssigkeit 14 enthältbeispielsweise Partikel, die der Filter 10 zurückhalten soll, während die Flüssigkeit über eine Absaugöffnung 20 im Boden 16 des Beckens abgesaugt wird. Die an die Absaugöffnung 20 angeschlossene Leitung sowie die Pumpe sind in üblicher Weise ausgeführt.

Am Boden des Beckens 12 ist um die Absaugöffnung 20 herum ein zylindrisches Standrohr 22 mit einem Fuß 24 verankert und dabei über eine Dichtung 26 gegen den Boden 16 abgedichtet. Es kann beispielsweise mit dem Boden 16 verschraubt sein.

Das Standrohr 22 ragt über die Flüssigkeitsoberfläche 18 hinaus und ist durch einen Deckel 28 abgedeckt. Der Deckel 28 weist Nasen 29 auf, mit denen er in Führungskonturen 30 des Standrohrs 22 eingreift. Die Nasen 29 und die Führungskonturen 30 bilden einen einfachen Bajonettverschluß, mit dem der Deckel 28 an dem Standrohr befestigt ist. Das Standrohr 22 ist mit seitlichen Durchlässen 32 versehen, die über das Standrohr mit der Absaugöffnung 20 in Verbindung stehen. Wahlweise kann auch lediglich ein Durchlaß vorgesehen sein.

Der Filter 10 umschließt einen Innenraum 34, in dem sich das Standrohr 22 befindet. Der Filter 10 weist an seinem Boden 36 eine ringförmige Dichtung 38 auf, die das Standrohr 22 dicht umschließt und den Boden 36 des Filters 10 gegen das Standrohr abdichtet. In Figur 1 ist der Filter 10 in seiner Arbeitsposition. Seine Außenseite 40 steht in Kontakt mit der Flüssigkeit 14. Diese wird von einem Filterelement 42 von etwaigen enthaltenen Partikeln, Verunreinigungen oder anderen Teilen gefiltert, so daß sich im Innenraum 34 des Filters 10 gefilterte Flüssigkeit 44 sammelt. Das Filterelement 42 ist zylindrisch und nimmt den überwiegenden Teil der Außenwand des Filters 10 ein. Die gefilterte Flüssigkeit 44 tritt durch die Durchlässe 32 des Standrohres 22 hindurch und wird über die Absaugöffnung 20 abgepumpt.

Da das Filterelement 42 die Außenwand des Filters 10 bildet, ergibt sich bei gegebener Größe des Filters eine vergleichsweise große Fläche für das Filterelement 42.

In der Arbeitsposition des Filters 10 dichtet die Dichtung 38 den Boden des Filters außerdem gegenüber dem Fuß 24 des Standrohres ab.

An seiner Oberseite weist der Filter 10 eine Decke 46 auf, die den Innenraum 34 abdeckt. An der Decke 46 ist eine Stütze 48 angeordnet, deren Funktion weiter unten erläutert wird.

In dem Standrohr 22 ist ein Schieber 50 mit einem Verschlußelement 52 für die Durchlässe 32 und einer Dichtlippe 54 angeordnet. Eine Druckfeder 56 ist zwischen einem an dem Schieber 50 befestigten Ring 58 und dem Deckel 28 eingespannt. Der Schieber 50 ist in dem Deckel 28 verschiebbar und ist gegen den Druck der Feder 56 mit einem Abstützelement in Form einer Querstange 60 an der Stütze 48 und einer vor der Zeichenebene liegenden weiteren Stütze 48 abgestützt. Der Schieber 50 wird dadurch in der in Figur 1 gezeigten offenen Stellung gehalten, in der die Durchlässe 32 mit der Absaugöffnung 20 verbunden sind. Außerdem wird der Filter 10 durch den über die Querstange 60 übertragenen Druck der Feder am Boden des Beckens 12 festgehalten.

Figur 2 zeigt die Filteranlage aus Figur 1, bei der sich der Filter 10 in seiner Entnahmeposition befindet. Der weitere Filter 10' ist am rechten Bildrand teilweise sichtbar.

In Figur 2 ist eine Mulde in der Stütze 48 zur Aufnahme der Querstange 60 sichtbar. Zur Entnahme des Filters 10 wird zunächst die Querstange 60 leicht angehoben und zusammen mit dem Schieber 50 um 90° gedreht, so daß die Querstange 60 zwischen den Stützen 48 abgesenkt werden kann. Beim Absenken des Schiebers 50 kommt die Dichtlippe 54 zum Anliegen am Fuß 24 des Standrohres 22 und dichtet dadurch die Absaugöffnung 20 ab. Gleichzeitig verschließt das Verschlußelement 52 die Durchlässe 32. Dieser Zustand ist in Figur 2 zu sehen.

Nach dem Verschließen der Durchlässe 32 und der Absaugöffnung 20, die durch die Wirkung der Feder 56 unterstützt und gesichert wird, kann die Querstange 60 aus dem Schieber 50 entnommen werden, wie durch einen gestrichelten Pfeil angedeutet ist. Danach kann der Filter 10 nach oben abgezogen werden. In der in Figur 2 gezeigten Entnahmeposition kann er nach oben abgenommen und dann gereinigt werden. Währenddessen ist der zweite Filter 10' immer noch in seiner Arbeitsposition, so daß weiterhin Flüssigkeit abgesaugt werden kann. Auf diese Weise kann ein ununterbrochener Betrieb anderer Maschinenteile gewährleistet werden, die auf kontinuierliche Zufuhr der gefilterten Flüssigkeit angewiesen sind.

Der gereinigte Filter 10 kann dann in die in Figur 2 gezeigte Position zurückgebracht werden und entlang des Standrohres 22 abgesenkt werden. Dabei dichtet die Dichtung 38 den Boden 36 des Filters 10 gegen das Standrohr 22 ab, so daß keine ungefilterte Flüssigkeit oder sonstiges Material in den Innenraum 34 des Filters 10 eindringen kann. Nach dem Absenken des Filters 10 kann dann mittels der Querstange 60 der Schieber 50 angehoben und die Verbindung der Durchlässe 32 mit der Absaugöffnung wieder hergestellt werden, wie in Figur 1 gezeigt.

Der Schieber 50 kann zusammen mit dem Verschlußelement 52 und der Feder 56 zur Reinigung vollständig aus dem Standrohr 22 herausgezogen und entnommen werden.

Es sei darauf hingewiesen, daß die Zeichnung nicht maßstäblich ist und insbesondere die Wandstärke des Standrohres 22 und somit die Tiefe der Durchlässe 32 zu Veranschaulichungszwecken übertrieben dargestellt ist.

Die gezeigte Ausführungsform ist lediglich ein Beispiel für die erfindungsgemäße Filteranlage. Die Gestaltung des Filters 20 und insbesondere der Dichteinrichtung, mit der der Filter 10 beim Absenken in seiner Arbeitsposition abgedichtet ist, kann beliebig variiert werden. So ist es beispielsweise denkbar, einen quaderförmigen Filter 10 mit geschlossenem Boden zu verwenden, der an seiner Seitenwand des Beckens 12 abgesenkt wird und eine dieser Seitenwand zugewandte Öffnung aufweist, die während des Absenkens des Filters gegen die Seitenwand abgedichtet ist. In seiner Arbeitsposition kann diese Öffnung dann einer Absaugöffnung in der Wand des Beckens 12 gegenüberliegen, die durch einen beispielsweise in der Wand angeordneten Schieber verschließbar ist. Der Filter kann wiederum ein Abstützelement für den Schieber aufweisen.

## Patentansprüche

1. Filteranlage für Flüssigkeiten,
- mit einem Becken (12) mit mindestens einer verschließbaren Absaugöffnung (20);
- mit mindestens einem Filter (10), der ein Filterelement (42) aufweist und aus einer Entnahmeposition oberhalb der Flüssigkeit (14) geradlinig in eine der Absaugöffnung (20) zugeordnete Arbeitsposition absenkbar ist;
- wobei in der Arbeitsposition des Filters (10) die Absaugöffnung (20) mit einem Innenraum (34) des Filters verbunden ist und im wesentlichen nur über das Filterelement (42) mit außerhalb des Filters (10) im Becken (12) befindlicher Flüssigkeit (14) verbunden ist,
- die Filteranlage eine Dichteinrichtung (38) aufweist, die während des Absenkens des Filters (10), während eine Außenseite (40) des Filters (10) in Kontakt mit der Flüssigkeit (14) im Becken (12) steht, den Innenraum (34) des Filters gegenüber der Flüssigkeit (14) im Becken (12) abgedichtet hält, wobei der Innenraum (34) des Filters im wesentlichen nur über das Filterelement (42) mit außerhalb des Filters (10) befindlicher Flüssigkeit (14) verbunden ist,
- wobei die Ansaugöffnung (20) an einem mit dem Boden (16) des Beckens (12) verbundenen, nach oben über die Flüssigkeitsoberfläche (18) hinausreichenden Rohr (22) angeordnet ist und der Filter (10) am Boden (36) eine Öffnung für das Rohr (22) zum Aufschieben des Filters (10) auf das Rohr (22) aufweist, die bei Absenken des Filters (10) von der Dichteinrichtung (38) gegen das Rohr (22) abgedichtet wird,
- wobei in der Wand des Rohrs (22) mindestens ein verschließbarer Durchlaß (32) angeordnet ist, der innen mit der Absaugöffnung (20) verbunden ist,
- und wobei in dem Rohr (22) ein Schieber (50) angeordnet ist, mit dem der Durchlaß (32) und die Absaugöffnung (20) gleichzeitig verschließbar sind.

2. Filteranlage nach Anspruch 1, **dadurch gekennzeichnet, daß** der Schieber (50) mittels Federkraft in seiner Schließstellung gehalten ist und ein Abstützelement (60) zum Abstützen des Schiebers (50) in seiner Offenstellung auf dem sich in der Arbeitsposition befindenden Filter (10) aufweist.

3. Filteranlage nach einem der Ansprüche 1 oder 2, **dadurch gekennzeichnet, daß** das Rohr (22) an seinem oberen Ende Führungskonturen (30) aufweist, an denen ein Deckel (28) in der Art eines Bajonettverschlusses verriegelbar ist.

4. Filteranlage nach einem der vorstehenden Ansprüche, **dadurch gekennzeichnet, daß** das Becken (12) mindestens zwei unabhängig voneinander verschließbare Absaugöffnungen (20) mit jeweils einem Filter (10; 10') aufweist, wobei die Filter (10: 10') unabhängig voneinander aus der Arbeitsposition in die Entnahmeposition bewegbar sind.

## Claims

1. Filter installation for liquids,
- with a basin (12) with at least one suction opening (20), which can be closed off,
- with at least one filter (10), which comprises a filter element (42) and, from a removal position above the liquid (14), can be lowered in a straight line into an operating position assigned to the suction opening (20),
- wherein the suction opening (20), in an operating position of the filter (10), is connected with an inner space (34) of the filter and is connected essentially only over the filter element (42) with liquid (14) outside of the filter (10) in the basin (12),
- the filter installation has a sealing device (38), which, during the lowering of the filter (10), while an external side (40) of the filter (10) is in contact with the liquid (14) in the basin (12), seals the inner space (34) of the filter from the liquid (14) in the basin (12), wherein the inner space (34) of the filter is connected essentially only over the filter element (42) with the liquid (14) outside of the filter (10),
- wherein the suction opening (20) is disposed at a pipe (22), which is connected with the bottom (16) of the basin (12) and extends upward over the liquid surface (18), and wherein, at the bottom (36) of the filter (10), there is an opening for the pipe (22) for pushing the filter (10) onto the pipe (22), which opening is sealed with respect to the pipe (22) by the sealing device (38) while the filter (10) is being lowered,
- wherein at least one opening (32), which can be closed off, is disposed in the wall of the pipe (22) and connected on the inside with the suction opening (20),
- and wherein in the pipe (22), a slide valve (50) is disposed, with which the openings (32) and the suction opening (20) can be closed off at the same time.

2. The filter installation of claim 1, **characterized in that** the slide valve (50) is held in its closed position by the force of a spring and has a supporting element (60) for supporting the slide valve (50), in the open position of the latter, on the filter (10), which is in the operating position.

3. The filter installation of one of the claims 1 or 2, **characterized in that** the pipe (22), at its upper end, comprises guiding contours (30), at which a lid (28) can be locked in the form of a bayonet connection.

4. The filter installation of one of the preceding claims, **characterized in that** the basin (12) has at least two suction openings (20), which can be closed off independently of one another and each of which has a filter (10; 10'), the filters (10; 10') being movable independently of one another from the operating position into the removal position.

## Revendications

1. Système de filtration pour liquides,
- avec un bassin (12) avec au moins une ouverture d'aspiration (20) pouvant être fermée ;
- avec au moins un filtre (10) qui comporte un élément filtrant (42) et qui peut être abaissé, depuis une position de prélèvement au-dessus du liquide (14), en ligne droite, dans une position de travail associée à l'ouverture d'aspiration (20) ;
- dans la position de travail du filtre (10), l'ouverture d'aspiration (20) communiquant avec une chambre intérieure (34) du filtre, et communiquant sensiblement uniquement par l'intermédiaire de l'élément filtrant (42) avec le liquide (14) se trouvant à l'extérieur du filtre (10) dans le bassin (12),
- le système de filtration comporte un dispositif d'étanchéité (38) qui, pendant l'abaissement du filtre (10), tandis qu'une face extérieure (40) du filtre (10) est en contact avec le liquide (14) dans le bassin (12), maintient étanche la chambre intérieure (34) du filtre par rapport au liquide (14) dans le bassin (12), la chambre intérieure (34) du filtre étant reliée au liquide (14) se trouvant à l'extérieur du filtre (10), sensiblement uniquement à travers l'élément filtrant (42),
- l'ouverture d'aspiration (20) étant disposée sur un tube (22) relié au fond (16) du bassin (12) et s'étendant vers le haut au-delà de la surface (18) du liquide, et le filtre (10) présentant sur le fond (36) une ouverture pour le tube (22), pour enfiler le filtre (10) sur le tube (22), laquelle ouverture est rendue étanche par rapport au tube (22), par le dispositif d'étanchéité (38), lors de l'abaissement du filtre (10),
au moins un passage (32) pouvant être fermé et qui communique à l'intérieur avec l'ouverture d'aspiration (20), étant disposé dans la paroi du tube (22),
et dans le tube (22) étant disposé un tiroir (50) qui permet de fermer simultanément le passage (32) et l'ouverture d'aspiration (20).

2. Système de filtration selon la revendication 1, **caractérisé en ce que** le tiroir (50) est maintenu dans sa position fermée par la force d'un ressort, et comporte un élément d'appui (60), pour soutenir le tiroir (50) dans sa position ouverte, sur le filtre (10) se trouvant en position de travail.

3. Système de filtration selon l'une quelconque des revendications 1 ou 2, **caractérisé en ce que** le tube (22) présente à son extrémité supérieure des contours de guidage (30) sur lesquels un couvercle peut être verrouillé à la manière d'une fermeture à baïonnette.

4. Système de filtration selon l'une quelconque des revendications 1 à 3, **caractérisé en ce que** le bassin (12) présente au moins deux ouvertures d'aspiration (20), pouvant être fermées indépendamment l'une de l'autre, avec chacune un filtre (10 ; 10'), les filtres (10 ; 10') étant déplaçables indépendamment l'un de l'autre, depuis la position de travail dans la position de prélèvement.
